# EUROPÄISCHE PATENTSCHRIFT

(11) **EP 2 703 572 B1**
(45) Veröffentlichungstag und Bekanntmachung des Hinweises auf die Patenterteilung: **20.05.2015**
(21) Anmeldenummer: 12182771.1
(22) Anmeldetag: 03.09.2012
(51) Int. Cl.: E03F 3/04, F28D 21/00

(54) **Wärmetauschermodul und Abwasserkanal mit Wärmetauscher**
Heat exchanger module and waste water channel with heat exchanger
Module d'échangeur thermique et canal d'eau usée avec échangeur thermique

(43) Veröffentlichungstag der Anmeldung: 05.03.2014
(73) Patentinhaber: Kasag Langnau AG, 3550 Langnau im Emmental (CH)
(72) Erfinder: Stucki, Beat, 3110 Münsingen (CH); Wyss, Roland, 3400 Burgdorf (CH)
(74) Vertreter: AMMANN PATENTANWÄLTE AG BERN

(56) Entgegenhaltungen:
- EP-A1- 1 795 663
- DE-B3-102009 035 271
- DE-U1-202004 018 084
- DE-U1-202011 106 449
- FR-A1- 2 954 819

## Beschreibung

Die Erfindung betrifft ein Wärmetauschermodul zum Einbau in einen Abwasserkanal, enthaltend mindestens eine von einem Wärmeträgermedium durchfliessbare Wärmetauscherkammer für den Kontakt mit Abwasser und Leitungen für die Zu- und Abführung des Wärmeträgermediums, wobei die Leitungen durch Verbindungsrohre mit der Wärmetauscherkammer strömungsmässig verbunden sind und die Leitungen im Bereich mindestens eines Längsrandes der Wärmetauscherkammer oberhalb dieser verlaufen.

Es sind aus einzelnen Modulen zusammengesetzte Wärmetauscher bekannt, die in einem Abwasserkanal eingebaut sind, um dem darin fliessenden Abwasser Wärme zu entziehen oder zuzuführen. Derartige Einrichtungen sind beispielsweise in den Dokumenten DE19719311, WO2010031193 und EP1946029 beschrieben. Gemäss dem zuletzt genannten Dokument sind Leitungen zum Vorlauf, zum Rücklauf und zur Verteilung eines Wärmetauschermediums zwischen einer Einlaufrinne und seitlichen Ablaufflächen angeordnet. Die freien Ränder der Ablaufflächen sind alternativ als Auflager zur Anordnung des Wärmetauscherelements in der Abwasserrohrleitung ausgebildet und nach einer Ausführungsart können sich Wärmetauscherkammern auch in den Bereich der seitlichen Ablaufflächen erstrecken. Das bedeutet, dass die genannten Leitungen durch die Ablaufbleche oder Teile der Wärmetauscherkammern überdeckt sind. Dies hat erhebliche Nachteile bei der Inspektion und insbesondere Leckdetektion zur Folge, weil die Leitungen beim Begehen der Abwasserrohrleitung nicht sichtbar sind. Auch bei der Montage der Wärmetauscherelemente ist diese Ausgestaltung nachteilig, weil zwischen jeweils zwei Wärmetauscherelementen eine Lücke zum Anbringen von Rohrverbindungen gelassen werden muss, die anschliessend durch einen Deckblechstreifen geschlossen wird. Ferner ist in dem Dokument angegeben, dass beispielsweise eine Dreipunktlagerung des Wärmetauscherelementes über die freien Randbereiche der Ablaufflächen sowie den Sohlpunkt der Einlaufrinne erreicht werden kann. Die ist aber praktisch kaum möglich, weil alle Komponenten gewissen Fabrikationstoleranzen unterworfen sind. Ein Anliegen des Sohlpunktes kann dazu führen, dass das Wärmetauscherelement in der Abwasserrohrleitung um den Sohlpunkt schaukelt und nicht stabil aufliegt.

Ähnliche Wärmetauschewrmodule sind auch in den Dokumenten DE102009035271B3, FR2954819A1, EP1795663A1, DE202011106449U1 und DE202004018084U1 beschrieben.

Ausgehend von diesem Stand der Technik liegt der Erfindung die Aufgabe zu Grunde, ein Wärmetauschermodul anzugeben, das einfach mit benachbarten Wärmetauschermodulen verbindbar ist und das stabil im Abwasserkanal aufliegt.

Diese Aufgabe wird erfindungsgemäss dadurch gelöst, dass beidseitig im Bereich der Längsränder der Wärmetauscherkammer an dieser Stegbleche angeordnet sind, die sich im Wesentlichen rechtwinklig zur Längsrichtung des Abwasserkanals erstrecken und die als ausschliessliche Abstützelemente des Wärmetauschermoduls im Abwasserkanal ausgebildet sind.

Diese erfindungsgemässe Lösung hat insbesondere die Vorteile, dass durch die Anordnung der Leitungen im Bereich mindestens eines Längsrandes der Wärmetauscherkammer oberhalb dieser die Leitungen einfach verbindbar, inspizierbar und gegebenenfalls reparierbar sind und dass durch die Stegbleche im Querschnitt gesehen eine statisch bestimmte Zweipunktauflage besteht.

Nach einer Ausführungsart der Erfindung weisen die Stegbleche im Bereich, in dem sie sich im Abwasserkanal abstützen, Auflageplatten auf. Dadurch kann die durch die Auflagekraft bedingte Flächenpressung tief gehalten werden und die Auflageplatten können zum Befestigen des Wärmetauschermoduls im Abwasserkanal, beispielsweise durch Schrauben, verwendet werden.

Nach einer weiteren Ausführungsart sind die Auflageplatten durch Abkanten von Bereichen der Stegbleche gebildet. So lassen sich die Auflageplatten besonders einfach herstellen. Darüber hinaus werden die Stegbleche durch die Abkantungen steifer.

Eine andere Ausführungsart sieht vor, dass die Leitungen in Ausnehmungen der Stegbleche getragen sind. Dadurch werden zusätzliche Tragelemente für die Leitungen überflüssig.

Gemäss einer zusätzlichen Ausführungsart sind die Stegbleche und die Leitungen durch Abdeckbleche abgedeckt. Mit dieser Massnahme werden Ablagerungen an den Stegblechen und Leitungen durch im Abwasser vorhandene Feststoffe reduziert.

Nach weiteren Ausführungsarten sind die Abdeckbleche an Befestigungslaschen der Stegbleche befestigt, wobei vorteilhaft die Befestigungslaschen durch Abkanten von Bereichen der Stegbleche gebildet sind.

Eine andere Ausführungsart sieht vor, dass mit dem Wärmetauschermodul ein Spannring verbunden ist, dessen Durchmesser mittels einer Spanneinrichtung erweiterbar ist, derart, dass der Spannring am Innenumfang des Abwasserkanals anliegt. Damit ist das Wärmetauschermodul im Abwasserkanal kraftschlüssig gegen eine Verschiebung fixiert, ohne dass es mit in der Wandung des Abwasserkanals verankerten Elementen wie Schrauben gesichert werden muss.

Ein anderer Aspekt der Erfindung betrifft einen Abwasserkanal mit einem Wärmetauscher, der dadurch gekennzeichnet ist, dass der Wärmetauscher aus mindestens zwei Wärmetauschermodulen besteht. Durch die erfindungsgemässe Konstruktion der Wärmetauschermodule lässt sich der Wärmetauscher einfach zusammenbauen.

Ausführungsbeispiele der Erfindung werden nachstehend unter Bezugnahme auf die angefügten Zeichnungen beispielsweise näher beschrieben. Es zeigt
- Figur 1: einen abgeschnittenen Querschnitt durch einen rohrförmigen Abwasserkanal mit einer ersten Ausführungsart eines Wärmetauschermoduls und
- Figur 2: einen Querschnitt durch einen rohrförmigen Abwasserkanal mit einer zweiten Ausführungsart eines Wärmetauschermoduls.

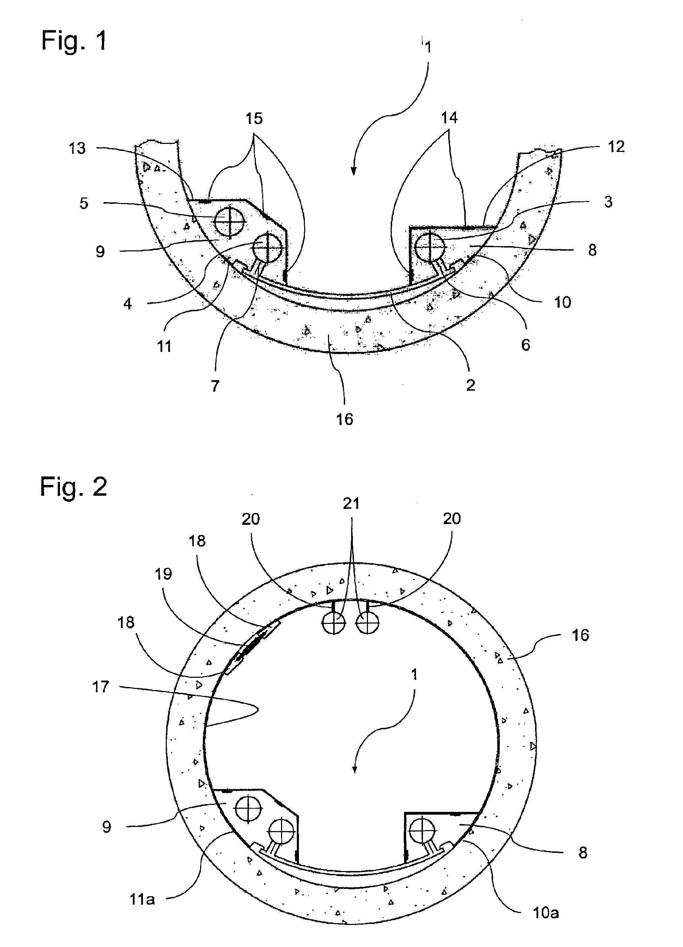

In der Darstellung gemäss Figur 1 ist ein rohrförmiger Abwasserkanal 16 ausschnittsweise dargestellt. Im unteren Bereich dieses Abwasserkanals 16 ruht ein als Ganzes mit der Bezugszahl 1 bezeichnetes Wärmetauschermodul. Üblicherweise sind im Abwasserkanal 16 mehrere, in Kanallängsrichtung hintereinander angeordnete Wärmetauschermodule 1 angeordnet und miteinander verbunden. Das Wärmetauschermodul 1 enthält mindestens eine Wärmetauscherkammer 2, das heisst einen Hohlkörper, der es gestattet, ein Wärmeträgermedium hindurch fliessen zu lassen und der dazu bestimmt ist, dass im Betrieb Abwasser über seine obere, äussere Oberfläche fliesst. Die Wärmetauscherkammer 2 kann in ihrem Inneren in bekannter Weise durch in der Figur nicht dargestellte Stege unterteilt sein, um einerseits die Aussenwände auf Abstand zu halten und andererseits das Wärmeträgermedium zu leiten. Alternativ kann die Wärmetauscherkammer 2 auch eine "pillow plate" Struktur aufweisen, indem sich die Aussenwände an Punkten oder Linien berühren und dort zusammengeschweisst sind, beispielsweise mittels Laser.

Oberhalb der Wärmetauscherkammer 2 sind Leitungen 3, 4 für die Zu- und Abführung des Wärmeträgermediums angeordnet. Wenn die Wärmetauschermodule 1 nach dem bekannten Tichelmann-System miteinander verbunden sind, kann eine weitere Leitung 5 vorhanden sein und weisen vorzugsweise einen kreisförmigen Querschnitt auf. Die Leitungen 3 und 4 sind mit Hilfe von Verbindungsrohren 6 bzw. 7 mit der Wärmetauscherkammer 2 strömungsmässig verbunden. Die Verbindungsrohre 6, 7 können wie dargestellt gerade oder aber auch gebogen ausgeführt sein. Die oberhalb der Wärmetauscherkammer 2 angeordneten Leitungen 3, 4 und 5 haben den wesentlichen Vorteil, dass sie bei der Montage der Wärmetauschermodule 1 im Abwasserkanal 16 zugänglich sind und mittels Rohrkupplungen oder Schweissverbindungen strömungsmässig und gegebenenfalls auch mechanisch miteinander verbunden werden können. Dieser Vorteil zeigt sich auch, wenn nach einiger Zeit des Betriebes die Rohrleitungen 3, 4 und 5 oder die Rohrkupplungen inspiziert und gegebenenfalls repariert werden müssen. Werden beispielsweise die Wärmetauschermodule und Leitungen zur Auffindung von Leckstellen von einer gefärbten Flüssigkeit durchströmt, können Leckagen sehr einfach durch Verfärbungen von der austretenden Flüssigkeit lokalisiert werden. Die Rohrleitungen 3, 4 und 5 müssen nicht zwingend wie dargestellt beidseitig im Bereich der Längsränder des Wärmetauschermoduls angeordnet sein, sondern können auch alle auf der gleichen Längsseite angeordnet sein.

Wie die Figuren 1 und 2 deutlich zeigen, stützt sich das Wärmetauschermodul 1 über Stegbleche 8, 9 an der Innenwand des Abwasserkanals 16 ab, wobei die Stegbleche 8, 9 insbesondere an der oberen Oberfläche des Wärmetauschermoduls 2 befestigt, insbesondere angeschweisst sind. Pro Wärmetauschermodul 1 sind beispielsweise vier Stegbleche 8 bzw. 9 vorgesehen, nämlich zwei auf jeder Längsseite des Wärmetauschermoduls 1. Gegenüberliegende Stegbleche 8 bzw. 9 müssen dabei nicht zwingend in einer gemeinsamen Querschnittsebene angeordnet sein, sondern können in Kanallängsrichtung gegeneinander versetzt sein. Um ein weiteres Beispiel zu nennen, können pro Wärmetauschermodul 1 auf einer Seite zwei Stegbleche 9 in einem Abstand voneinander angeordnet sein, während auf der gegenüberliegenden Seite ein einziges Stegblech 8 in Kanallängsrichtung zwischen den beiden Stegblechen 9 angeordnet ist. So wird in jedem Fall eine klar definierte Auflage des Wärmetauschermoduls 1 im Abwasserkanal 16 erreicht, wobei die Wärmetauscherkammer selbst nicht im Abwasserkanal 16 aufliegt. Es kann eine weitere Aufgabe einzelner oder aller Stegbleche sein, die Rohre 3, 4 und 5 zu tragen. Dabei können die Rohre 3, 4, 5 in Ausnehmungen der Stegbleche 8, 9, bevorzugt wie dargestellt in dem Querschnitt der Leitungen 3, 4, 5 entsprechenden Öffnungen aufgenommen sein.

Figur 1 zeigt an der im Abwasserkanal 16 aufliegenden Kante des Stegbleches 8 eine Auflageplatte 10 und an der im Abwasserkanal 16 aufliegenden Kante des Stegbleches 9 eine Auflageplatte 11. Die Auflageplatten 10, 11 können durch Abbiegen mindestens eines Längsbereichs der Kanten der Stegbleche 8, 9 gebildet oder als beispielsweise an den Stegblechen und gegebenenfalls zusätzlich an einem Deckblech der Wärmetauscherkammer 2 angeschweisste Platten ausgebildet sein. Mit Hilfe der Auflageplatten 10, 11 kann das Wärmetauschermodul 1 im Abwasserkanal 16 abgestützt und wenn gewünscht festgeschraubt werden.

Im dargestellten Ausführungsbeispiel der Erfindung sind die Leitungen 3, 4, 5 und die Stegbleche 8, 9 durch Abdeckbleche 12 und 13 abgedeckt. Dies ist nicht zwingend, verhindert aber das Hängenbleiben von Feststoffen aus dem Abwasser, insbesondere an den Stegblechen 8, 9. Das Abdeckblech 12 ist mit Hilfe von Befestigungslaschen 14 am Stegblech 8 befestigt und das Abdeckblech 13 ist mit Hilfe von Befestigungslaschen 15 am Stegblech 9 befestigt. Die Befestigungslaschen 14, 15 können in gleicher Weise gebildet sein wie die zuvor beschriebenen Auflageplatten 10, 11. Nach dem Abnehmen der Abdeckbleche 12, 13 hat man ungehinderten Zugang zu den Leitungen 3, 4 und 5, ohne dass die stabile Auflage des Wärmetauschermoduls 1 im Abwasserkanal 16 tangiert wird.

Die vorangehend beschriebenen Komponenten des Wärmetauschermoduls 1 bestehen bevorzugt aus Metall, besonders bevorzugt aus nichtrostendem Stahl.

Figur 2 zeigt eine andere Ausführungsart des Wärmetauschermoduls, die insbesondere für Abwasserkanäle 16 vorgesehen ist, in denen keine Befestigungslöcher gebohrt werden dürfen. Dies kann beispielsweise bei mit Kunststoff ausgekleideten Abwasserkanälen der Fall sein. Im dargestellten Beispiel sind die Stegbleche 8, 9 mit Auflageplatten 10a, 11a ausgestattet, die sich über den grössten Teil der die Innenwand des Abwasserkanals 16 kontaktierenden Kantenlänge der Stegbleche 8, 9 erstrecken. Durch die Auflageplatten 10a, 11a wird die Flächenpressung gering gehalten. Ein Spannring 17 ist mit zwei gegenüberliegenden Stegblechen 8, 9 verbunden, derart dass er eine Druckkraft auf das Wärmetauschermodul 1, beispielsweise über die Stegbleche 8, 9 übertragen kann. Eine Spanneinrichtung 19 überbrückt einen Unterbruch im Spannring 17 und ist mit Laschen 18 mit diesem verbunden. Die Spanneinrichtung kann beispielsweise aus einer Hülse bestehen, in der auf einer Seite ein Rechtsgewinde und auf der gegenüberliegenden Seite ein Linksgewinde angeordnet ist. Zwei die Hülse eingeschraubte Gewindebolzen sind mit den Laschen 18 verbunden, derart dass durch Drehen an der Hülse die Laschen 18 auseinander gedrängt und damit das Wärmetauschermodul 1 im Abwasserkanal 16 reibschlüssig verspannt wird. Wie Figur 2 weiter zeigt, kann der Spannring 17 auch dazu benutzt werden, weitere Elemente wie beispielsweise Leitungen 21 über am Spannring 17 befestigte Träger 20 im Abwasserkanal 16 anzuordnen, beispielsweise aufzuhängen.

Der Ordnung halber sei darauf hingewiesen, dass zum besseren Verständnis des Aufbaus des erfindungsgemässen Wärmetauschermoduls 1 dieses bzw. dessen Bestandteile in den Figuren teilweise unmassstäblich bzw. nicht proportional verkleinert dargestellt sind.

Die Figuren zeigen Ausführungsbeispiele mit einem Abwasserkanal 16 mit einem kreisrunden Querschnitt. Der Abwasserkanal kann aber auch eine andere Querschnittsform wie ein Oval oder eine Ellipse haben und er kann auch beispielsweise rechteckig mit einem ebenen Boden ausgebildet sein.

### Bezugszeichenliste

- 1: Wärmetauschermodul
- 2: Wärmetauscherkammer
- 3: Leitung
- 4: Leitung
- 5: Weitere Leitung
- 6: Verbindungsrohr
- 7: Verbindungsrohr
- 8: Stegblech
- 9: Stegblech
- 10: Auflageplatte
- 10a: Auflageplatte
- 11: Auflageplatte
- 11a: Auflageplatte
- 12: Abdeckblech
- 13: Abdeckblech
- 14: Befestigungslasche
- 15: Befestigungslasche
- 16: Abwasserkanal
- 17: Spannring
- 18: Laschen
- 19: Spanneinrichtung
- 20: Träger
- 21: Leitungen
- 22:
- 23:
- 24:
- 25:
- 26:
- 27:
- 28:

## Patentansprüche

1. Wärmetauschermodul (1) zum Einbau in einen Abwasserkanal (16), enthaltend mindestens eine von einem Wärmeträgermedium durchfliessbare Wärmetauscherkammer (2) für den Kontakt mit Abwasser und Leitungen (3, 4) für die Zu- und Abführung des Wärmeträgermediums, wobei die Leitungen (3, 4) durch Verbindungsrohre (6, 7) mit der Wärmetauscherkammer (2) strömungsmässig verbunden sind und die Leitungen (3, 4) im Bereich mindestens eines Längsrandes der Wärmetauscherkammer (2) oberhalb dieser verlaufen, **dadurch gekennzeichnet, dass** beidseitig im Bereich der Längsränder der Wärmetauscherkammer (2) an dieser Stegbleche (8, 9) angeordnet sind, die sich im Wesentlichen rechtwinklig zur Längsrichtung des Abwasserkanals (16) erstrecken und die als ausschliessliche Abstützelemente des Wärmetauschermoduls (1) im Abwasserkanal (16) ausgebildet sind.

2. Wärmetauschermodul (1) nach Anspruch 1, **dadurch gekennzeichnet, dass** die Stegbleche (8, 9) im Bereich, in dem sie sich im Abwasserkanal (16) abstützen, Auflageplatten (10, 11) aufweisen.

3. Wärmetauschermodul (1) nach Anspruch 2, **dadurch gekennzeichnet, dass** die Auflageplatten (10, 11) durch Abkanten von Bereichen der Stegbleche (8, 9) gebildet sind.

4. Wärmetauschermodul (1) nach einem der vorangehenden Patentansprüche, **dadurch gekennzeichnet, dass** die Leitungen (3, 4) in Ausnehmungen der Stegbleche (8, 9) getragen sind.

5. Wärmetauschermodul (1) nach einem der vorangehenden Ansprüche, **dadurch gekennzeichnet, dass** die Stegbleche (8, 9) und die Leitungen (3, 4) durch Abdeckbleche (12, 13) abgedeckt sind.

6. Wärmetauschermodul (1) nach Anspruch 5, **dadurch gekennzeichnet, dass** die Abdeckbleche (12, 13) an Befestigungslaschen (14, 15) der Stegbleche (8, 9) befestigt sind.

7. Wärmetauschermodul (1) nach Anspruch 6, **dadurch gekennzeichnet, dass** die Befestigungslaschen (14, 15) durch Abkanten von Bereichen der Stegbleche (8, 9) gebildet sind.

8. Wärmetauschermodul (1) nach einem der vorangehenden Patentansprüche, **dadurch gekennzeichnet, dass** mit dem Wärmetauschermodul (1) ein Spannring (17) verbunden ist, dessen Durchmesser mittels einer Spanneinrichtung (19) erweiterbar ist, derart, dass der Spannring (17) am Innenumfang des Abwasserkanals (16) anliegt.

9. Abwasserkanal mit einem Wärmetauscher, **dadurch gekennzeichnet, dass** der Wärmetauscher aus mindestens zwei Wärmetauschermodulen (1) nach einem der vorangehenden Patentansprüche besteht.

## Claims

1. Heat exchanger module (1) for installation in a sewer (16), comprising at least one heat exchanger chamber (2) intended for a heat transfer medium flowing therein and for contact with the sewage, and ducts (3, 4) for the supply and return of the heat transfer medium, the ducts (3, 4) being fluidly connected to the heat exchanger chamber (2) by connecting pipes (6, 7) and the ducts (3, 4) being located above the heat exchanger chamber (2) in the area of at least one longitudinal edge of the latter, **characterised in that** web plates (8, 9) are arranged on both sides of the heat exchanger chamber (2) in the area of the longitudinal edges of the latter which extend substantially orthogonally to the longitudinal direction of the sewer (16) and are designed as the exclusive supporting elements of the heat exchanger module (1) in the sewer (16).

2. Heat exchanger module (1) according to claim 1, **characterised in that** in the area in which they rest on the sewer (16), the web plates (8, 9) are provided with bearing plates (10, 11).

3. Heat exchanger module (1) according to claim 2, **characterised in that** the bearing plates (10, 11) are formed by bending portions of the web plates (8, 9).

4. Heat exchanger module (1) according to one of the preceding claims, **characterised in that** the ducts (3, 4) are supported in recesses of the web plates (8, 9).

5. Heat exchanger module (1) according to one of the preceding claims, **characterised in that** the web plates (8, 9) and the ducts (3, 4) are covered by cover plates (12, 13).

6. Heat exchanger module (1) according to claim 5, **characterised in that** the cover plates (12, 13) are fastened to fastening lugs (14, 15) of the web plates (8, 9).

7. Heat exchanger module (1) according to claim 6, **characterised in that** the fastening lugs (14, 15) are formed by bending portions of the web plates (8, 9).

8. Heat exchanger module (1) according to one of the preceding claims, **characterised in that** a tensioning ring (17) is connected to the heat exchanger module (1) whose diameter can be enlarged by a tensioning device (19) such that the tensioning ring (17) lies against the inner circumference of the sewer (16).

9. Sewer with a heat exchanger, **characterised in that** the heat exchanger is composed of at least two heat exchanger modules (1) according to one of the preceding claims.

## Revendications

1. Module d'échangeur de chaleur (1) pour installation dans un canal d'évacuation d'eaux usées (16), comprenant au moins une chambre d'échangeur de chaleur pouvant être traversée par un agent de transfert de chaleur et destinée au contact avec les eaux usées, ainsi que des conduites (3, 4) pour amener et reconduire l'agent de transfert de chaleur, les conduites (3, 4) étant fluidiquement reliées à la chambre d'échangeur de chaleur (2) par des tuyaux de liaison (6, 7) et les conduites (3, 4) s'étendant au-dessus de la chambre d'échangeur de chaleur (2) dans le domaine d'au moins un bord longitudinal de celle-ci, **caractérisé en ce que** des tôles d'âme (8, 9) sont montées sur la chambre d'échangeur de chaleur (2) dans le domaine des bords longitudinaux de celle-ci, lesquelles d'étendent substantiellement orthogonalement à la direction longitudinale du canal d'évacuation d'eaux usées (16) et qui constituent les éléments d'appui exclusifs du module d'échangeur de chaleur (1) dans le canal d'évacuation d'eaux usées (16).

2. Module d'échangeur de chaleur (1) selon la revendication 1, **caractérisé en ce que** les tôles d'âme (8, 9) sont munies de plaques d'appui (10, 11) dans le domaine où elles prennent appui dans le canal d'évacuation d'eaux usées (16).

3. Module d'échangeur de chaleur (1) selon la revendication 2, **caractérisé en ce que** les plaques d'appui (10, 11) sont formées par pliage de parties des tôles d'âme (8, 9).

4. Module d'échangeur de chaleur (1) selon l'une des revendications précédentes, **caractérisé en ce que** les conduites (3, 4) sont soutenues dans des évidements des tôles d'âme (8, 9).

5. Module d'échangeur de chaleur (1) selon l'une des revendications précédentes, **caractérisé en ce que** les tôles d'âme (8, 9) et les conduites (3, 4) sont recouvertes par des tôles de recouvrement (12, 13).

6. Module d'échangeur de chaleur (1) selon la revendication 5, **caractérisé en ce que** les tôles de recouvrement (12, 13) sont attachées à des pattes de fixation (14, 15) des tôles d'âme (8, 9).

7. Module d'échangeur de chaleur (1) selon la revendication 6, **caractérisé en ce que** les pattes de fixation (14, 15) sont formées par pliage de parties des tôles d'âme (8, 9).

8. Module d'échangeur de chaleur (1) selon l'une des revendications précédentes, **caractérisé en ce que** le module d'échangeur de chaleur (1) est relié à un anneau de tension (17) dont le diamètre peut être élargi au moyen d'un dispositif tendeur (19) de telle manière que l'anneau de tension (17) s'appuie sur la circonférence intérieure du canal d'évacuation d'eaux usées (16).

9. Canal d'évacuation d'eaux usées avec un échangeur de chaleur, **caractérisé en ce que** l'échangeur de chaleur est composé d'au moins deux modules d'échangeur de chaleur (1) selon l'une des revendications précédentes.
